# EUROPÄISCHE PATENTSCHRIFT

(11) **EP 3 650 253 B1**
(45) Veröffentlichungstag und Bekanntmachung des Hinweises auf die Patenterteilung: **06.04.2022**
(21) Anmeldenummer: 19206853.4
(22) Anmeldetag: 04.11.2019
(51) Int. Cl.: B60H 1/32, F25B 15/16, F25B 17/08, F25B 39/02

(54) **HEIZSYSTEM FÜR EIN FAHRZEUG UND VERFAHREN ZUM ERWÄRMEN EINES FAHRZEUGS**
HEATING SYSTEM FOR A VEHICLE AND METHOD FOR HEATING A VEHICLE
SYSTÈME DE CHAUFFAGE POUR UN VÉHICULE ET PROCÉDÉ DE CHAUFFAGE D'UN VÉHICULE

(30) Priorität: 08.11.2018 DE 102018127861
(43) Veröffentlichungstag der Anmeldung: 13.05.2020
(73) Patentinhaber: Purem GmbH, 66539 Neunkirchen (DE)
(72) Erfinder: Gaiser, Gerd, 72768 Reutlingen (DE)
(74) Vertreter: Ruttensperger Lachnit Trossin Gomoll

(56) Entgegenhaltungen:
- WO-A1-2013/059785
- WO-A2-2013/167834
- DE-A1- 4 310 836
- DE-A1-102015 010 003

## Beschreibung

Die vorliegende Erfindung betrifft ein Heizsystem für ein Fahrzeug, insbesondere ein elektrisch betriebenes Fahrzeug.

Vor allem bei elektrisch betriebenen Fahrzeugen besteht im Wesentlichen nicht die Möglichkeit, die in einem Antriebsaggregat anfallende Abwärme zur Erwärmung verschiedener Systembereiche des Fahrzeugs, wie zum Beispiel des Fahrzeuginnenraums, zu nutzen. Um auch bei derartigen Fahrzeugen eine ausreichende Erwärmung zu erlangen, ist es beispielsweise bekannt, elektrische Heizeinrichtungen, beispielsweise PTC-Heizer, einzusetzen. Diese werden im Fahrbetrieb aus einer in einem Fahrzeug vorhandenen Batterie gespeist, welche grundsätzlich auch die für den Fahrantrieb erforderliche elektrische Energie bereitstellt. Die Belastung einer derartigen Batterie durch zum Erwärmen eines Fahrzeugs mit elektrischer Energie zu speisende Heizeinrichtungen ist eine zusätzliche Belastung, welche die für den Fahrantrieb verfügbare Energie mindert und somit insbesondere bei vergleichsweise niedrigen Umgebungstemperaturen zu einer substantiellen Verringerung der Reichweite elektrisch betriebener Fahrzeuge führen kann.

Ein Heizsystem für ein Fahrzeug gemäß dem Oberbegriff des Anspruchs 1 ist aus der WO 2013/167834 A2 bekannt. Bei diesem Heizsystem wird das in dem Reaktionsmittelspeicherraum gespeicherte flüssige zweite Reaktionsmittel über ein steuerbares Ventil in den das erste Reaktionsmittel enthaltenden Reaktionsraum eingeleitet. Ein Teil des zweiten Reaktionsmittels reagiert mit dem im Reaktionsraum vorhandenen ersten Reaktionsmittel bzw. wird daran absorbiert. Ein weiterer Teil des zweiten Reaktionsmittels verdampft aufgrund der bei der Reaktion entstehenden Wärme und wird in gasförmigem Zustand in Richtung zu einem Kondensator abgegeben. An diesem Kondensator wird das zweite Reaktionsmittel verflüssigt und in den Reaktionsmittelspeicherraum weitergeleitet. Die am Kondensator entstehende Wärme wird auf ein in einem Wärmeträgermediumkreislauf zirkulierendes Wärmeträgermedium übertragen und über dieses im Fahrzeug nutzbar. Das im Reaktionsmittelspeicherraum mit dem ersten Reaktionsmittel reagierende und dabei daran gebundene zweite Reaktionsmittel kann durch Wärmeeintrag vermittels das erste Reaktionsmittel durchströmendem Abgas einer Brennkraftmaschine von dem ersten Reaktionsmittel getrennt und in gasförmigem Zustand zum Kondensator geleitet werden.

Es ist die Aufgabe der vorliegenden Erfindung, ein Heizsystem für ein Fahrzeug zum Erwärmen eines Fahrzeugs vorzusehen, mit welchen ohne Belastung einer in einem Fahrzeug vorhandenen Quelle elektrischer Energie zuverlässig eine ausreichende Erwärmung des Fahrzeugs erreicht werden kann.

Gemäß der vorliegenden Erfindung wird diese Aufgabe gelöst durch ein Heizsystem für ein Fahrzeug gemäß Anspruch 1. Dieses umfasst:
- einen ein erstes Reaktionsmittel enthaltenden Reaktionsraum,
- einen ein zweites Reaktionsmittel enthaltenden oder/und aufnehmenden Reaktionsmittelspeicherraum, wobei das erste Reaktionsmittel und das zweite Reaktionsmittel ein derartiges Reaktionssystem bilden, dass eine Reaktion des ersten Reaktionsmittels mit dem zweiten Reaktionsmittel zur Erzeugung eines Reaktionsprodukts Wärme freisetzt und durch Wärmeeintrag in das Reaktionsprodukt das zweite Reaktionsmittel von dem ersten Reaktionsmittel separierbar ist,
- eine Reaktionsmittelabgabeanordnung zur Abgabe von flüssigem zweitem Reaktionsmittel aus dem Reaktionsmittelspeicherraum in den Reaktionsraum,
- eine erste Wärmeabfuhranordnung zum Abführen von Wärme aus dem in dem Reaktionsraum enthaltenen ersten Reaktionsmittel oder/und Reaktionsprodukt,
- eine Heizanordnung zum Erwärmen des in dem Reaktionsraum enthaltenen ersten Reaktionsmittels oder/und Reaktionsprodukts,
- eine Reaktionsmittelrückspeiseanordnung zum Rückspeisen von zweitem Reaktionsmittel aus dem Reaktionsraum in den Reaktionsmittelspeicherraum.

Die Heizanordnung umfasst eine elektrisch erregbare Heizleiteranordnung.

Für die Abfuhr der bei der Reaktion des ersten Reaktionsmittels mit dem zweiten Reaktionsmittel im Reaktionsraum generierten Wärme umfasst erfindungsgemäß die erste Wärmeabfuhranordnung einen Wärmeträgermediumkreislauf mit einer Wärmetauscheranordnung zur Übertragung von in in dem Wärmeträgermediumkreislauf zirkulierendem Wärmeträgermedium transportierter Wärme auf ein zu erwärmendes Medium. Das Wärmeträgermedium kann somit beispielsweise den Reaktionsraum in dem durch diesen hindurchführenden Wärmeträgermediumkreislauf durchströmen und dabei Wärme aus dem den Wärmeträgermediumkreislauf umgebenden Reaktionsprodukt bzw. ersten Reaktionsmittel aufnehmen.

Das Heizsystem der vorliegenden Erfindung nutzt zur Bereitstellung der zur Erwärmung eines Fahrzeugs erforderlichen Wärme einen zyklisch wiederholbaren Prozess der Reaktion zweier Reaktionsmittel miteinander und der Separierung der beiden in einem Reaktionsprodukt enthaltenen Reaktionsmittel voneinander. Bei der während des Fahrbetriebs herbeigeführten Reaktion der beiden Reaktionsmittel zur Erzeugung des Reaktionsprodukts wird Wärme freigesetzt, welche im Fahrbetrieb eines Fahrzeugs beispielsweise zur Erwärmung der in den Fahrzeuginnenraum einzuleitenden Luft genutzt werden kann. Die Separierung der beiden in dem Reaktionsprodukt enthaltenen Reaktionsmittel voneinander beispielsweise durch Aufspalten des Reaktionsprodukts zum Wiedererhalt der beiden Reaktionsmittel durch Wärmeeintrag kann dann erfolgen, wenn ein mit einem erfindungsgemäßen Heizsystem ausgestattetes Fahrzeug nicht im Fahrbetrieb ist, beispielsweise in einer Phase, in welcher die eine Quelle elektrischer Energie bereitstellende Batterie eines derartigen Fahrzeugs wieder aufgeladen wird.

Um zur Bereitstellung der erforderlichen Wärmemenge eine definierte Abgabe von erstem Reaktionsmittel in den Reaktionsraum erreichen zu können, umfasst die Reaktionsmittelabgabeanordnung eine Reaktionsmittelabgabeleitung und eine Ventilanordnung zur wahlweisen Herstellung und Unterbrechung einer Reaktionsmittelabgabeverbindung zwischen dem Reaktionsmittelspeicherraum und dem Reaktionsraum umfassen. Durch Ansteuerung der Ventilanordnung kann somit die Menge des in den Reaktionsraum abgegebenen zweiten Reaktionsmittels und damit auch die bei der im Reaktionsraum ablaufenden Reaktion freigesetzte Wärmemenge eingestellt werden.

Zur Bereitstellung des zweiten Reaktionsmittels in einem einerseits für die Speicherung im Reaktionsmittelspeicherraum und andererseits für die Durchführung der Reaktion mit dem ersten Reaktionsmittel geeigneten Aggregatzustand wird vorgeschlagen, dass die Reaktionsmittelrückspeiseanordnung eine Reaktionsmittelrückspeiseleitung und eine Kondensatoranordnung zur Aufnahme von aus dem Reaktionsraum als Gas austretendem zweiten Reaktionsmittel und zum Speisen von flüssigem zweitem Reaktionsmittel in den Reaktionsmittelspeicherraum umfasst.

Die Abfuhr von Wärme aus dem durch Erwärmung im Reaktionsraum als Gas austretenden ersten Reaktionsmittel kann beispielsweise dadurch realisiert werden, dass die Kondensatoranordnung eine zweite Wärmeabfuhranordnung zum Abführen von Wärme von dem in einem Kondensator aufgenommenen zweiten Reaktionsmittel umfasst.

Um die Heizanordnung mit elektrischer Energie zu speisen, kann vorgesehen sein, dass die Heizanordnung eine Anschlusseinheit zum Anschließen der Heizleiteranordnung an eine fahrzeugexterne Spannungsquelle umfasst. Als fahrzeugexterne Energiequelle kann dabei in vorteilhafter Weise ein an einem Fahrzeugstellplatz, beispielsweise in einer Garage, vorhandenes Netzspannungssystem genutzt werden. Somit besteht die Möglichkeit, dass immer dann, wenn ein elektrisch betriebenes Fahrzeug an ein derartiges Netzspannungssystem angeschlossen wird, um die in dem Fahrzeug vorgesehene Batterie oder gegebenenfalls mehrere Batterien aufzuladen, gleichzeitig auch die an das als externe Spannungsquelle genutzte Netzspannungssystem angeschlossene Heizanordnung betrieben wird, um durch Erwärmung des im Reaktionsraum vorhandenen Reaktionsprodukts das erste Reaktionsmittel vom zweiten Reaktionsmittel zu separieren und im Reaktionsmittelspeicherraum für einen nachfolgend in einer Erwärmungsphase wieder durchzuführenden Heizbetrieb zu speichern.

Das Reaktionssystem kann mit dem erstem Reaktionsmittel chemisch reagierendes zweites Reaktionsmittel umfasst.

Beispielsweise kann vorgesehen sein, dass das erste Reaktionsmittel Calciumoxid ist oder enthält und das zweite Reaktionsmittel Wasser ist oder enthält.

Bei einer alternativen Ausgestaltung kann das Reaktionssystem mit dem erstem Reaktionsmittel thermophysikalisch reagierendes, vorzugsweise durch das erste Reaktionsmittel adsorbierbares, zweites Reaktionsmittel umfassen.

Beispielsweise kann bei dieser alternativen Ausgestaltung vorgesehen sein, dass das erste Reaktionsmittel Zeolith ist oder enthält und das zweite Reaktionsmittel Wasser ist oder enthält.

Ein beispielhaftes, nicht zur Erfindung gehörendes Verfahren zur Bereitstellung von Wärme zur Erwärmung eines Fahrzeugs umfasst die Maßnahmen:
a) in einer Erwärmungsphase, Einleiten eines zweiten Reaktionsmittels in ein in einem Reaktionsraum enthaltenes erstes Reaktionsmittel zur Erzeugung eines Reaktionsprodukts durch eine Reaktion des ersten Reaktionsmittels mit dem zweiten Reaktionsmittel, wobei das erste Reaktionsmittel und das zweite Reaktionsmittel ein derartiges Reaktionssystem bilden, dass eine Reaktion des ersten Reaktionsmittels mit dem zweiten Reaktionsmittel zur Erzeugung des Reaktionsprodukts Wärme freisetzt und durch Wärmeeintrag in das Reaktionsprodukt das zweite Reaktionsmittel von dem ersten Reaktionsmittel separierbar ist
b) in einer Erwärmungsvorbereitungsphase, Erwärmen des in dem Reaktionsraum enthaltenen Reaktionsprodukts und Ableiten von durch die Erwärmung des Reaktionsprodukts freigesetztem zweitem Reaktionsmittel aus dem Reaktionsraum.

Bei der Maßnahme a) kann das zweite Reaktionsmittel aus einem das zweite Reaktionsmittel enthaltenden Reaktionsmittelspeicherraum in den Reaktionsraum abgegeben werden.

Ferner kann bei der Maßnahme a) im Reaktionsraum durch die Reaktion des ersten Reaktionsmittels mit dem zweiten Reaktionsmittel bereitgestellte Wärme in einem den Reaktionsraum durchströmenden oder/und umströmenden Wärmeträgermedium aufgenommen und abtransportiert werden.

Bei der Maßnahme b) kann das im Reaktionsraum enthaltene Reaktionsprodukt durch eine elektrisch erregbare Heizleiteranordnung erwärmt werden.

Eine Belastung der in einem Fahrzeug vorhandenen Energiequelle kann dadurch vermieden werden, dass bei der Maßnahme b) Energie zur Erwärmung des im Reaktionsraum enthaltenen Reaktionsprodukts von einer fahrzeugexternen Energiequelle, vorzugsweise einem Netzspannungssystem, bereitgestellt wird.

Die beiden Reaktionsmittel können ein derartiges Reaktionssystem bereitstellen, dass bei der Maßnahme a) das erste Reaktionsmittel mit dem zweiten Reaktionsmittel chemisch reagiert.

Beispielsweise kann hierfür vorgesehen sein, dass das erste Reaktionsmittel Calciumoxid ist oder enthält und das zweite Reaktionsmittel Wasser ist oder enthält.

Bei einer alternativen Ausgestaltung können die beiden Reaktionsmittel ein derartiges Redaktionssystem bereitstellen, dass bei der Maßnahme a) das erste Reaktionsmittel mit dem zweiten Reaktionsmittel thermophysikalisch reagieret, vorzugsweise das erste Reaktionsmittel durch das erste Reaktionsmittel adsorbiert wird.

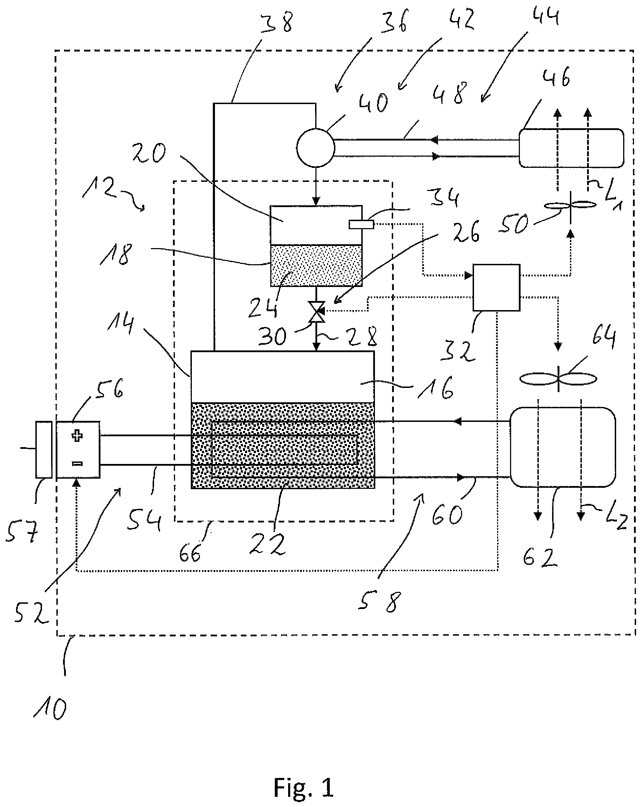

In diesem Falle kann beispielsweise vorgesehen sein, dass das erste Reaktionsmittel Zeolith ist oder enthält und das zweite Reaktionsmittel Wasser ist oder enthält Die vorliegende Erfindung wird nachfolgend mit Bezug auf die Fig. 1 beschrieben, welche in prinzipartiger Darstellung den Aufbau eines mit einem Heizsystem ausgestatteten Fahrzeugs veranschaulicht.

In Fig. 1 ist ein in einem schematisch angedeuteten Fahrzeug 10 vorgesehenes Heizsystem allgemein mit 12 bezeichnet. Das Heizsystem 12 umfasst als wesentlichen Bestandteile einen Reaktionsbehälter 14 mit einem darin ausgebildeten Reaktionsraum 16 sowie einen Reaktionsmittelspeicherbehälter 18 mit einem darin ausgebildeten Reaktionsmittelspeicherraum 20.

Im Reaktionsbehälter 14 bzw. dem darin ausgebildeten Reaktionsraum 16 ist ein nachfolgend noch detaillierter erläutertes erstes Reaktionsmittel 22 beispielsweise in festem Aggregatzustand vorgesehen. Dabei kann das erste Reaktionsmittel 22 beispielsweise in pulverartiger oder körniger Form vorliegen und im Reaktionsraum 16 im Wesentlichen lose verteilt sein. Der Reaktionsraum 16 kann beispielsweise auch in mehrere voneinander getrennte und jeweils Teile des ersten Reaktionsmittels 22 enthaltende Volumenbereiche unterteilt sein, beispielsweise durch elastisch verformbare Separationselemente.

Im Reaktionsmittelspeicherbehälter 18 bzw. dem Reaktionsmittelspeicherraum 20 ist ein zweites Reaktionsmittel 24 in flüssigem Aggregatzustand aufgenommen. Durch eine allgemein mit 26 bezeichnete Reaktionsmittelabgabeanordnung kann flüssiges zweites Reaktionsmittel 24 aus dem Reaktionsmittelspeicherraum 20 in den Reaktionsraum 16 abgegeben werden. Die Reaktionsmittelabgabeanordnung 26 umfasst im dargestellten Beispiel eine Reaktionsmittelabgabeleitung 28 sowie eine in der Reaktionsmittelabgabeleitung 28 vorgesehene Ventilanordnung 30, die beispielsweise ein Magnetventil umfassen kann. Die Ventilanordnung 30 steht unter der Ansteuerung einer allgemein mit 32 bezeichneten Ansteueranordnung. Durch Erzeugung entsprechender Ansteuerbefehle kann die Reaktionsmittelabgabeleitung 28 zur Herstellung einer Verbindung zwischen dem Reaktionsmittelspeicherraum 20 und dem Reaktionsraum 16 freigegeben bzw. zum Unterbrechen dieser Verbindung blockiert werden. Dabei ist vorzugsweise die Ventilanordnung 30 auch derart ansteuerbar, dass die Menge des pro Zeiteinheit vom Reaktionsmittelspeicherraum 20 in den Reaktionsraum 16 abgegebenen zweiten Reaktionsmittels 24 einstellbar ist. Ein Füllstandssensor 34 kann Information über den Füllstand von zweitem Reaktionsmittel 24 im Reaktionsmittelspeicherraum 20 zur Ansteueranordnung 32 ausgeben, so dass in der Ansteueranordnung 32 grundsätzlich Information über die im Reaktionsmittelspeicherraum 20 vorhandene Menge des zweiten Reaktionsmittels 24 vorhanden ist.

Der Reaktionsraum 16 und der Reaktionsmittelspeicherraum 20 stehen ferner über eine Reaktionsmittelrückspeiseanordnung 36 in Verbindung miteinander. Die Reaktionsmittelrückspeiseanordnung 36 umfasst eine Reaktionsmittelrückspeiseleitung 38, die vom Reaktionsraum 16 zu einem Kondensator 40 einer allgemein mit 42 bezeichneten Kondensatoranordnung führt. Die Kondensatoranordnung 42 umfasst ferner eine Wärmeabfuhranordnung 44 mit einem Wärmetauscher 46 und einem einerseits den Kondensator 40 und andererseits den Wärmetauscher 46 durchsetzenden Wärmeträgermediumkreislauf 48.

Aus dem Reaktionsraum 16 über die Reaktionsmittelrückspeiseleitung 38 in den Kondensator 40 geleitetes, gasförmiges zweites Reaktionsmittel 24 gibt im Bereich des Kondensators 40 auf das im Wärmeträgermediumkreislauf 48 beispielsweise durch die Förderwirkung einer Pumpe zirkulierende, im Allgemeinen flüssige Wärmeträgermedium Wärme ab. Dieses Wärmeträgermedium gibt die Wärme im Bereich des Wärmetauschers 46 beispielsweise auf durch ein Gebläse 50 über den Wärmetauscher 46 hinweg geförderte Luft L₁ ab, so dass im Kondensator 40 das gasförmige zweite Reaktionsmittel 24 abgekühlt wird, kondensiert und sich in flüssiger Form im Reaktionsmittelspeicherraum 20 ansammelt. Das Gebläse 50 kann dabei unter der Ansteuerung der Ansteueranordnung 32 stehen, um immer dann, wenn in einer nachfolgend beschriebenen Erwärmungsvorbereitungsphase gasförmiges zweites Reaktionsmittel 24 aus dem Reaktionsraum 16 abgegeben wird und insofern eine Kühlung im Bereich des Kondensators 40 erforderlich ist, durch Betreiben des Gebläses 50 sicherstellen zu können, dass das im Wärmeträgermediumkreislauf 48 zirkulierende Wärmeträgermedium die im Kondensator 40 aufgenommene Wärme über den Wärmetauscher 46 an die Luft L₁ abgeben kann.

Dem im Reaktionsraum 16 angeordneten ersten Reaktionsmittel 22 ist eine allgemein mit 52 bezeichnete Heizanordnung zugeordnet. Die Heizanordnung 52 umfasst eine durch elektrische Erregung erwärmbare Heizleiteranordnung 54, welche den Reaktionsraum 16 bzw. das darin enthaltene erste Reaktionsmittel 22 derart durchsetzt, dass eine über das Volumen des ersten Reaktionsmittels 22 näherungsweise gleichmäßige Erwärmung desselben erfolgen kann. Beispielsweise kann die Heizleiteranordnung 54 mehrfach gewunden oder/und in verschiedenen Ebenen verlaufend den Reaktionsraum 16 bzw. das erste Reaktionsmittel 22 durchsetzen.

Die Heizanordnung 52 umfasst ferner eine Anschlusseinheit 56, mit welcher die Heizleiteranordnung 52 an eine fahrzeugexterne Spannungsquelle 57, beispielsweise ein in einem Gebäude oder an einem Fahrzeugstellplatz vorgesehenes Netzspannungssystem, angeschlossen werden kann. Beispielsweise kann die Anschlusseinheit 56 integriert sein oder bereitgestellt sein durch eine zum Aufladen einer Fahrzeugbatterie an einem Fahrzeug vorgesehene Anschlusseinheit. Dies bedeutet, dass immer dann, wenn mit einer derartigen Anschlusseinheit 56 ein Fahrzeug an ein Netzspannungssystem, allgemein also die fahrzeugexterne Spannungsquelle 57, angeschlossen wird, auch die Heizleiteranordnung 54 erregt werden kann, um auf diese Art und Weise das im Reaktionsraum 16 vorhandene erste Reaktionsmittel 22 oder/und ein nachfolgend erläutertes und bei der Reaktion von erstem Reaktionsmittel 22 und zweitem Reaktionsmittel 24 entstehendes Reaktionsprodukt im Reaktionsraum 16 derart zu erwärmen, dass das Reaktionsprodukt aufgespalten wird und somit zweite Reaktionsmittel 24 vom ersten Reaktionsmittel 22 separiert wird, in gasförmigem Aggregatzustand aus diesem austritt und den Reaktionsraum 16 über die Reaktionsmittelrückspeiseleitung 38 in Richtung zum Kondensator 40 verlässt.

Dem Reaktionsbehälter 14 ist ferner eine allgemein mit 58 bezeichnete Wärmeabfuhranordnung zugeordnet. Diese umfasst einen Wärmeträgermediumkreislauf 60, in welchem, beispielsweise gefördert durch eine Pumpe, ein im Allgemeinen flüssiges Wärmeträgermedium zirkuliert und dabei in den im Inneren des Reaktionsraums 16 sich erstreckenden Bereich des Wärmeträgermediumkreislaufs 60 den Reaktionsraum 16 bzw. das darin enthaltene erste Reaktionsmittel 22 oder/und Reaktionsprodukt durchströmt. Das im Wärmeträgermediumkreislauf 60 zirkulierende Wärmeträgermedium kann im Bereich des Reaktionsraums 16 Wärme aufnehmen und zu einem Wärmetauscher 62 transportieren. Durch ein Gebläse 64 geförderte und beispielsweise in einen Fahrzeuginnenraum einzuleitende Luft L₂ nimmt im Bereich des Wärmetauschers 62 Wärme von dem im Wärmeträgermediumkreislauf 60 zirkulierenden Wärmeträgermedium auf und transportiert diese somit in den Bereich eines Fahrzeugs, welcher erwärmt werden soll. Dabei kann auch das Gebläse 64 unter der Ansteuerung der Ansteueranordnung 32 stehen.

Um sowohl bei der Reaktion der beiden Reaktionsmittel 22, 24 zur Erzeugung des Reaktionsprodukts unter Freisetzung von Wärme, als auch bei der Erregung der Heizleiteranordnung 54 zum separieren der beiden Reaktionsmittel 22, 24 voneinander Wärmeverluste nach außen zu vermeiden und insbesondere auch das im Reaktionsmittelspeicherraum 20 in flüssiger Form vorhandene zweite Reaktionsmittel 24 vor niedrigen Umgebungstemperaturen zu schützen, kann ein den Reaktionsbehälter 14 und den Reaktionsmittelspeicherbehälter 18 aufnehmendes, thermisch isoliertes Außengehäuse 66 vorgesehen sein.

Nachfolgend wird anhand eines Beispiels für ein Reaktionssystem, welches als erstes Reaktionsmittel 22 Calciumoxid (CaO) und als zweites Reaktionsmittel 24 Wasser (H₂O) umfasst, die Funktionsweise des Heizsystems 12 beschrieben. Dieses Reaktionssystem stellt also ein Reaktionssystem bereit, bei welchem die Reaktion zwischen erstem und zweitem Reaktionsmittel eine chemische Reaktion ist.

Ausgehend von einem Betriebszustand, in welchem beispielsweise ein Großteil oder das gesamte in dem Heizsystem 12 vorhandene zweite Reaktionsmittel 24, also flüssiges Wasser, im Reaktionsmittelspeicherraum 20 enthalten ist, kann beispielsweise im Fahrbetrieb des Fahrzeugs 10 dann, wenn eine Erwärmung des Fahrzeuginnenraums erforderlich ist, die Ventilanordnung 30 durch die Ansteueranordnung 32 zur Freigabe der Verbindung des Reaktionsmittelspeicherraums 20 mit dem Reaktionsraum 16 und somit zur Abgabe einer definierten Menge des flüssigen zweiten Reaktionsmittels 24 in den Reaktionsraum 16 angesteuert werden. Gelangt das flüssige erste Reaktionsmittel 24, also Wasser, in den ersten Reaktionsraum 16, so reagiert es mit dem darin enthaltenen ersten Reaktionsmittel 22, also Calciumoxid, zu Calciumhydroxid (CaOH). Bei dieser Reaktion wird Wärme freigesetzt, welche in dem im Reaktionsraum 16 sich erstreckenden Bereich des Wärmeträgermediumkreislaufs 60 bzw. dem darin zirkulierenden Wärmeträgermedium aufgenommen und zum Wärmetauscher 62 gefördert werden kann. Wird durch die Ansteueranordnung 32 auch das Gebläse 64 in Betrieb gesetzt, so durchströmt die in den Fahrzeuginnenraum einzuleitende Luft L₂ den Wärmetauscher 62, nimmt Wärme auf und kann somit erwärmt in den Fahrzeuginnenraum eingeleitet werden. Dieser allgemein als Erwärmungsphase bezeichnete Vorgang kann fortgesetzt werden, so lange im Reaktionsmittelspeicherraum 20 das das zweite Reaktionsmittel 24 bereitstellende flüssige Wasser vorhanden ist. Im Allgemeinen ist die Menge des zur Verfügung stehenden zweiten Reaktionsmittels 24, in diesem Falle also Wasser, so bemessen, dass zumindest für die Dauer, in welcher das Fahrzeug 10 auch elektromotorisch betrieben werden kann, zweites Reaktionsmittel 24 zum Einleiten in den Reaktionsraum 16 bereitsteht.

Nach im Reaktionsraum 16 durchgeführter Reaktion und dabei im Reaktionsraum 16 erzeugtem Reaktionsprodukt, in diesem Falle also Calciumhydroxid, kann in einer Phase, in welcher das Fahrzeug 10 zum Aufladen einer Fahrzeugbatterie an ein Netzspannungssystem angeschlossen wird, durch elektrische Erregung der Heizleiteranordnung 54 das im Reaktionsraum 16 vorhandene Reaktionsprodukt, also Calciumhydroxid, durch Erwärmung auf eine Temperatur im Bereich von etwa 600 °C aufgespalten werden, so dass das Reaktionsprodukt aufgespalten wird und das zweite Reaktionsmittel 24, in diesem Falle also Wasser, getrennt vom erstem Reaktionsmittel 22, also Calciumoxid, bereitgestellt wird und aufgrund der vergleichsweise hohen Temperatur in gasförmigem Aggregatzustand aus dem Reaktionsraum 16 in die Reaktionsmittelrückspeiseleitung 38 und den Kondensator 40 gelangt. In dieser Erwärmungsvorbereitungsphase kann die Ansteueranordnung 32 dann das Gebläse 50 ansteuern, um für eine ausreichende Kühlung des zunächst in gasförmigem Aggregatzustand vorhandenen zweiten Reaktionsmittels 24 zu sorgen, so dass dieses im Kondensator 40 kondensiert und in flüssigem Aggregatzustand in den Reaktionsmittelspeicherraum 20 gelangt. Um die im Wärmetauscher 46 auf die Luft L₁ übertragene Wärme nutzen zu können, kann beispielsweise die Luft L₁ in den Innenraum des Fahrzeugs 10 geleitet werden, um somit das Fahrzeug zu erwärmen bzw. erwärmt zu halten.

Der Füllstand von zweitem Reaktionsmittel 24 im Reaktionsmittelspeicherraum 20 kann durch den Füllstandssensor 34 erfasst werden. Die Ansteueranordnung 32 kann somit durch Zufuhr des den Füllstand repräsentierenden Signals erkennen, wie groß der Anteil des im Heizsystem 12 vorhandenen zweiten Reaktionsmittels 24 im Reaktionsmittelspeicherraum 20 ist. Indiziert das Signal des Füllstandsensors 34, dass das gesamte oder im Wesentlichen das gesamte im Heizsystem 12 vorhandene zweite Reaktionsmittel 24 in flüssiger Form im Reaktionsmittelspeicherraum 20 angesammelt ist, so kann die Ansteueranordnung 32 die Anschlusseinheit 56 ansteuern, um ein fortgesetztes Erregen der Heizleiteranordnung 54 zu unterbinden, diese also zu deaktivieren. Es kann in diesem Zustand dann beispielsweise die für den Fahrantrieb auch genutzte Batterie des Fahrzeugs 10 weiterhin geladen werden. Ein zusätzlicher Verbrauch von elektrischer Energie zum Erregen der Heizleiteranordnung 54 in einem Zustand, in welchem im Reaktionsraum 16 im Wesentlichen kein Reaktionsprodukt mehr, sondern nur noch erstes Reaktionsmittel 22, in diesem Falle also Calciumoxid, enthalten ist, kann somit vermieden werden. Nachfolgend ist das Heizsystem 12 wieder für die Durchführung eines Heizbetriebs in einer Erwärmungsphase bereit.

Mit dem vorangehend anhand eines Beispiels für ein chemisch reagierendes Reaktionssystem beschriebenen Heizsystem 12 wird es durch eine zyklisch wiederholbare Abfolge von Erwärmungsphasen und Erwärmungsvorbereitungsphasen möglich, das Heizsystem 12 immer wieder in einen für einen nachfolgenden Fahrbetrieb geeigneten Zustand zu bringen, welcher dann durch das länger andauernde Einleiten von zweitem Reaktionsmittel 24 in den Reaktionsraum 16 die kontinuierliche Bereitstellung und Abgabe von Wärme durch Durchführung der Reaktion zwischen dem ersten Reaktionsmittel 22 und dem zweiten Reaktionsmittel 24 und dementsprechend auch die Erwärmung der in einen Fahrzeuginnenraum einzuleitenden Luft L₂ bzw. anderer Systembereiche eines Fahrzeugs ermöglicht. Da ein Verbrauch irgendeines Betriebsstoffes nicht eintritt, sondern das erste Reaktionsmittel 22 und das zweite Reaktionsmittel 24 beliebig oft zur Durchführung der zum Reaktionsprodukt führenden Reaktion in Wechselwirkung miteinander gebracht werden können und nachfolgend dementsprechend beliebig oft durch den Eintrag von Wärme wieder voneinander separiert werden können, arbeitet das Heizsystem 12 insbesondere hinsichtlich der eingesetzten Betriebsstoffe verschleißfrei.

Ein derartiges thermochemisches Reaktionssystem kann als alternatives erstes Reaktionsmittel 22 Magnesiumoxid umfassen, welches mit Wasser als zweites Reaktionsmittel zu Magnesiumhydroxid reagieren kann. Auch Bariumoxid oder Strontiumoxid kann als erstes Reaktionsmittel 22 eingesetzt werden.

Bei einem weiteren alternativen thermochemischen Reaktionssystem kann als erstes Reaktionsmittel 22 Calciumchlorid-Hydrat mit Wasser als zweites Reaktionsmittel 24 zur Reaktion gebracht werden, um dabei Calciumchlorid-Dihydrat als Reaktionsprodukt zu erzeugen, das durch Wärmezufuhr wieder in seine Ausgangsstoffe, also Calciumchlorid-Hydrat und Wasser, aufgespalten werden kann.

Vorangehend sind der Aufbau und der Betrieb eines erfindungsgemäßen Heizsystems zum Erwärmen eines Fahrzeugs anhand eines Calciumoxid und Wasser als Reaktionsmittel umfassenden und somit eine chemische Reaktion der beiden Reaktionsmittel einbeziehenden Beispiels für ein thermochemisches Reaktionssystem erläutert worden.

Ein alternatives Reaktionssystem kann beispielsweise bereitgestellt sein durch Reaktionsmittel, welche in einer thermophysikalischen Reaktion miteinander reagieren, beispielsweise indem das zweite Reaktionsmittel durch das erste Reaktionsmittel absorbiert wird. Ein derartiges Reaktionssystem kann als erstes Reaktionsmittel beispielsweise Zeolith, wie zum Beispiel Zeolith 13X, umfassen. Das zweite Reaktionsmittel kann Wasser sein oder enthalten. Der Kontakt von Wasser mit Zeolith führt unter Freisetzung von Wärme zur Absorption von Wasser am Zeolith. Die Wärmezufuhr in das so bereitgestellte Reaktionsprodukt führt zur Desorption des Wassers in gasförmigem Aggregatzustand. Alternativ zu Wasser kann als zweites Reaktionsmittel 24 Ethanol oder ein Wasser/Ethanol-Gemisch bzw. allgemein ein eine polare Flüssigkeit eingesetzt werden.

Als alternative erste Reaktionsmittel bzw. Adsorbentien derartiger thermophysikalisch reagierender Reaktionssysteme können neben Zeolith, wie zum Beispiel hydrophilem Zeolith oder dealuminiertem, also hydrophobem Zeolith, beispielsweise Silicagel, Aktivkohle, beispielsweise in Form von Aktivkohle-Molekularsieben, sowie Bentonit verwendet werden. Insbesondere bei Verwendung von dealuminiertem Zeolith (DAY-Zeolith) als erstes Reaktionsmittel 22 können organische Stoffe, wie zum Beispiel Lösemittel, als zweites Reaktionsmittel 24 eingesetzt werden.

Als alternative zweite Reaktionsmittel bzw. adsorptive Stoffe können neben Wasser, insbesondere destilliertem Wasser, allgemein Alkohol, Kohlenwasserstoff oder Gemische daraus, Carbonsäuren, saure wässrige Lösungen, alkalisch wässrige Lösungen sowie ammoniakalische wässrige Lösungen Anwendung finden.

## Patentansprüche

1. Heizsystem für ein Fahrzeug, umfassend:
- einen ein erstes Reaktionsmittel (22) enthaltenden Reaktionsraum (16),
- einen ein zweites Reaktionsmittel (24) enthaltenden oder/und aufnehmenden Reaktionsmittelspeicherraum (20), wobei das erste Reaktionsmittel (22) und das zweite Reaktionsmittel (24) ein derartiges Reaktionssystem bilden, dass eine Reaktion des ersten Reaktionsmittels (22) mit dem zweiten Reaktionsmittel (24) zur Erzeugung eines Reaktionsprodukts Wärme freisetzt und durch Wärmeeintrag in das Reaktionsprodukt das zweite Reaktionsmittel (24) von dem ersten Reaktionsmittel (22) separierbar ist,
- eine Reaktionsmittelabgabeanordnung (26) zur Abgabe von flüssigem zweitem Reaktionsmittel (24) aus dem Reaktionsmittelspeicherraum (20) in den Reaktionsraum (16), wobei die Reaktionsmittelabgabeanordnung (26) eine Reaktionsmittelabgabeleitung (28) und eine Ventilanordnung (30) zur wahlweisen Herstellung und Unterbrechung einer Reaktionsmittelabgabeverbindung zwischen dem Reaktionsmittelspeicherraum (20) und dem Reaktionsraum (16) umfasst, so dass durch Ansteuerung der Ventilanordnung (30) die Menge des in den Reaktionsraum (16) abgegebenen zweiten Reaktionsmittels (24) und damit die bei der im Reaktionsraum (16) ablaufenden Reaktion freigesetzte Wärmemenge einstellbar ist,
- eine erste Wärmeabfuhranordnung (58) zum Abführen von Wärme aus dem in dem Reaktionsraum (16) enthaltenen ersten Reaktionsmittel (22) oder/und Reaktionsprodukt,
- eine Heizanordnung (52) zum Erwärmen des in dem Reaktionsraum (16) enthaltenen ersten Reaktionsmittels (22) oder/und Reaktionsprodukts,
- eine Reaktionsmittelrückspeiseanordnung (36) zum Rückspeisen von zweitem Reaktionsmittel (24) aus dem Reaktionsraum (16) in den Reaktionsmittelspeicherraum (20),
**dadurch gekennzeichnet, dass** die erste Wärmeabfuhranordnung (58) einen Wärmeträgermediumkreislauf (60) mit einer Wärmetauscheranordnung (62) zur Übertragung von in in dem Wärmeträgermediumkreislauf (60) zirkulierendem Wärmeträgermedium transportierter Wärme auf ein zu erwärmendes Medium umfasst, und dass die Heizanordnung (52) eine elektrisch erregbare Heizleiteranordnung (54) umfasst.

2. Heizsystem nach Anspruch 1, **dadurch gekennzeichnet, dass** die Reaktionsmittelrückspeiseanordnung (36) eine Reaktionsmittelrückspeiseleitung (38) und eine Kondensatoranordnung (42) zur Aufnahme von aus dem Reaktionsraum (16) als Gas austretendem zweiten Reaktionsmittel (24) und zum Speisen von flüssigem zweitem Reaktionsmittel (24) in den Reaktionsmittelspeicherraum (20) umfasst.

3. Heizsystem nach Anspruch 2, **dadurch gekennzeichnet, dass** die Kondensatoranordnung (42) eine zweite Wärmeabfuhranordnung (44) zum Abführen von Wärme von dem in einem Kondensator (40) aufgenommenen zweiten Reaktionsmittel (24) umfasst.

4. Heizsystem nach einem der vorangehenden Ansprüche, **dadurch gekennzeichnet, dass** die Heizanordnung (52) eine Anschlusseinheit (56) zum Anschließen der Heizleiteranordnung (54) an eine fahrzeugexterne Spannungsquelle (57) umfasst.

5. Heizsystem nach einem der vorangehenden Ansprüche, **dadurch gekennzeichnet, dass** das Reaktionssystem mit dem erstem Reaktionsmittel (22) chemisch reagierendes zweites Reaktionsmittel (24) umfasst.

6. Heizsystem nach Anspruch 5, **dadurch gekennzeichnet, dass** das erste Reaktionsmittel (22) Calciumoxid ist oder enthält und das zweite Reaktionsmittel Wasser ist oder enthält.

7. Heizsystem nach einem der Ansprüche 1-4, **dadurch gekennzeichnet, dass** das Reaktionssystem mit dem erstem Reaktionsmittel (22) thermophysikalisch reagierendes, vorzugsweise durch das erste Reaktionsmittel (22) adsorbierbares, zweites Reaktionsmittel (24) umfasst.

8. Heizsystem nach Anspruch 7, **dadurch gekennzeichnet, dass** das erste Reaktionsmittel (22) Zeolith ist oder enthält und das zweite Reaktionsmittel (24) Wasser ist oder enthält.

## Claims

1. Heating system for a vehicle, comprising:
- a reaction space (16) containing a first reactant (22),
- a reactant storage space (20) containing or/and receiving a second reactant (24), wherein the first reactant (22) and the second reactant (24) form such a reaction system that a reaction of the first reactant (22) with the second reactant (24) for producing a reaction product releases heat and the second reactant (24) can be separated from the first reactant (22) by introducing heat into the reaction product,
- a reactant-releasing device (26) for releasing liquid second reactant (24) from the reactant storage space (20) into the reaction space (16), wherein the reactant-releasing device (26) comprises a reactant-releasing line (28) and a valve assembly (30) for optionally establishing and interrupting a reaction-releasing connection between the reactant storage space (20) and the reaction space (16), so that by actuating the valve assembly (30) the amount of second reactant (24) released into the reaction space (16) and thus the amount of heat released during the reaction occurring inside the reaction space (16) can be controlled,
- a first heat removal device (58) for removing heat from the first reactant (22) or/and reaction product contained in the reaction space (16),
- a heating unit (52) for heating the first reactant (22) or/and reaction product contained in the reaction space (16), and
- a reactant-recirculating device (36) for recirculating second reactant (24) from the reaction space (16) into the reactant storage space (20),
**characterized in that** the first heat removal device (58) comprises a heat carrier medium circuit (60) with a heat exchanger device (62) for transferring heat transported in a heat carrier medium circulating in the heat carrier medium circuit (60) to a medium to be heated, and that the heating unit (52) comprises an electrically energizable heat conductor device (54).

2. Heating system in accordance with claim 1, **characterized in that** the reactant-recirculating device (36) comprises a reactant-recirculating line (38) and a condenser device (42) for receiving second reactant (24) leaving the reaction space (16) as a gas and for feeding liquid second reactant (24) into the reactant storage space (20).

3. Heating system in accordance with claim 2, **characterized in that** the condenser device (42) comprises a second heat removal device (44) for removing heat from the second reactant (24) received in a condenser (40).

4. Heating system in accordance with one of the preceding claims, **characterized in that** the heating unit (52) comprises a connection unit (56) for connecting the heat conductor device (54) to a voltage source (57) that is external in relation to the vehicle.

5. Heating system in accordance with one of the preceding claims, **characterized in that** the reaction system comprises a second reactant (24) reacting chemically with the first reactant (22).

6. Heating system in accordance with claim 5, **characterized in that** the first reactant (22) is or contains calcium oxide and the second reactant is or contains water.

7. Heating system in accordance with one of the claims 1-4, **characterized in that** the reaction system comprises a second reactant (24) that reacts thermophysically with the first reactant (22) and can preferably be adsorbed by the first reactant (22).

8. Heating system in accordance with claim 7, **characterized in that** the first reactant (22) is or contains zeolite and the second reactant (24) is or contains water.

## Revendications

1. Système de chauffage pour un véhicule, comprenant :
- un espace de réaction (16) comprenant un premier réactif (22),
- un espace de stockage de réactif (20) comprenant ou/et recevant un deuxième réactif (24), dans lequel le premier réactif (22) et le deuxième réactif (24) forment un système réactionnel tel qu'une réaction du premier réactif (22) avec le deuxième réactif (24) pour produire un produit de réaction libère de la chaleur et que le deuxième réactif (24) peut être séparé du premier réactif (22) en introduisant de la chaleur dans le produit de réaction,
- un dispositif de libération de réactif (26) pour introduire le deuxième réactif liquide (24) de l'espace de stockage de réactif (20) dans l'espace de réaction (16), dans lequel le dispositif de libération de réactif (26) comprend une conduite de libération de réactif (28) et un ensemble de soupape (30) pour établir et interrompre facultativement une connexion de libération de réaction entre l'espace de stockage de réactif (20) et l'espace de réaction (16), de sorte qu'en actionnant l'ensemble de soupape (30), la quantité de deuxième réactif (24) introduite dans l'espace de réaction (16) et donc la quantité de chaleur libérée pendant la réaction se produisant à l'intérieur de l'espace de réaction (16) peuvent être contrôlées,
- un premier dispositif d'évacuation de chaleur (58) pour évacuer la chaleur du premier réactif (22) ou/et du produit de réaction contenu dans l'espace de réaction (16),
- une unité de chauffage (52) pour chauffer le premier réactif (22) ou/et le produit de réaction contenu dans l'espace de réaction (16), et
- un dispositif de recirculation de réactif (36) pour faire recirculer le deuxième réactif (24) de l'espace de réaction (16) dans l'espace de stockage de réactif (20),
**caractérisé en ce que** le premier dispositif d'évacuation de chaleur (58) comprend un circuit de milieu caloporteur (60) avec un dispositif d'échangeur de chaleur (62) pour transférer la chaleur transportée dans un milieu caloporteur circulant dans le circuit de milieu caloporteur (60) à un milieu à chauffer, et **en ce que** l'unité de chauffage (52) comprend un dispositif conducteur de chaleur pouvant être alimenté électriquement (54).

2. Système de chauffage selon la revendication 1, **caractérisé en ce que** le dispositif de recirculation de réactif (36) comprend une conduite de recirculation de réactif (38) et un dispositif de condensation (42) pour recevoir le deuxième réactif (24) quittant l'espace de réaction (16) sous forme de gaz et pour alimenter le deuxième réactif liquide (24) dans l'espace de stockage de réactif (20).

3. Système de chauffage selon la revendication 2, **caractérisé en ce que** le dispositif de condensation (42) comprend un deuxième dispositif d'évacuation de chaleur (44) pour évacuer la chaleur du deuxième réactif (24) reçu dans un condenseur (40).

4. Système de chauffage selon l'une des revendications précédentes, **caractérisé en ce que** l'unité de chauffage (52) comprend une unité de connexion (56) pour connecter le dispositif conducteur de chaleur (54) à une source de tension (57) externe par rapport au véhicule.

5. Système de chauffage selon l'une des revendications précédentes, **caractérisé en ce que** le système réactionnel comprend un deuxième réactif (24) réagissant chimiquement avec le premier réactif (22).

6. Système de chauffage selon la revendication 5, **caractérisé en ce que** le premier réactif (22) est ou contient de l'oxyde de calcium et le deuxième réactif est ou contient de l'eau.

7. Système de chauffage selon l'une des revendications 1 à 4, **caractérisé en ce que** le système réactionnel comprend un deuxième réactif (24) qui réagit thermophysiquement avec le premier réactif (22) et peut de préférence être adsorbé par le premier réactif (22).

8. Système de chauffage selon la revendication 7, **caractérisé en ce que** le premier réactif (22) est ou contient de la zéolite et le deuxième réactif (24) est ou contient de l'eau.
